# EUROPÄISCHE PATENTSCHRIFT

(11) **EP 2 806 108 B1**
(45) Veröffentlichungstag und Bekanntmachung des Hinweises auf die Patenterteilung: **10.02.2016**
(21) Anmeldenummer: 13168642.0
(22) Anmeldetag: 22.05.2013
(51) Int. Cl.: F01D 9/06, F01D 9/02, F16L 23/02

(54) **Zwischenstück und Strömungsmaschine**
Connector and flow engine
Pièce intermédiaire et turbomachine

(43) Veröffentlichungstag der Anmeldung: 26.11.2014
(73) Patentinhaber: MTU Aero Engines AG, 80995 München (DE)
(72) Erfinder: Rauscher, Stefan, 86551 Aichach (DE); Lauer, Christoph, 80637 München (DE)

(56) Entgegenhaltungen:
- DE-B- 1 042 606
- FR-A1- 2 736 088
- US-A1- 2002 150 466

## Beschreibung

Die Erfindung betrifft ein Zwischenstück zum Anschluss einer Fluidleitung an einen Gehäuseabschnitt einer Strömungsmaschine nach dem Oberbegriff des Patentanspruchs 1 und eine Strömungsmaschine.

Ein bekanntes Zwischenstück zum Anschluss einer Fluidleitung an einen Gehäuseabschnitt einer Strömungsmaschine wie eine Gasturbine und insbesondere ein Flugtriebwerk weist ein Kerngehäuse auf, in dem ein Fluidkanal zum Herstellen einer Fluidverbindung zwischen der Fluidleitung und einem Gehäuseeinlass ausgebildet ist. Zur Befestigung des Zwischenstückes an dem Gehäuseabschnitt sowie zur Anbindung eines Anschlusselements der Fluidleitung erstrecken sich von dem Kerngehäuse ein oberes Flanschpaar und ein unteres Flanschpaar, die bezogen auf eine Kanalachse gleich orientiert sind und somit quasi deckungsgleich übereinander liegend angeordnet sind. Aufgrund der übereinanderliegenden Anordnung der Flanschpaare ist ein Mindestabstand zwischen den Flanschpaaren notwendig, um Befestigungsmittel wie Schrauben oder Schraubenmuttern zur Befestigung des Zwischenstücks an dem Gehäuse oder zur Anbindung des Leitungsanschlusselements an dem Zwischenstück positionieren zu können.

In der US 20020150466 A1 ist ein Zwischenstück zum Anschluss einer Fluidleitung an einen Gehäuseabschnitt einer Strömungsmaschine gezeigt, der einen Flansch in Form einer unteren Flanschplatte zur Befestigung des Zwischenstücks am Gehäuseabschnitt und einen Flansch in Form eines oberen Ringflansches zur Befestigung eines Leitungsanschlusselements aufweist. Zur Positionierung von Befestigungsmitteln in Durchführungen der Flansche sind die Flanschplatte und der Ringflansch in Richtung einer Kanalachse voneinander beabstandet.

Aufgabe der Erfindung ist es, ein Zwischenstück zum Anschluss einer Fluidleitung an einen Gehäuseabschnitt einer Strömungsmaschine zu schaffen, das die vorgenannten Nachteile beseitigt und eine reduzierte Bauhöhe aufweist. Des Weiteren ist es Aufgabe der Erfindung, eine Strömungsmaschine mit entlang ihres Gehäuses dicht bzw. eng geführten Fluidleitungen zu schaffen.

Diese Aufgabe wird gelöst, durch ein Zwischenstück mit den Merkmalen des Patentanspruchs 1 und durch eine Strömungsmaschine mit den Merkmalen des Patentanspruchs 10.

Ein erfindungsgemäßes Zwischenstück zum Anschluss einer Fluidleitung an einen Gehäuseabschnitt einer Strömungsmaschine hat ein Kerngehäuse, in dem ein Fluidkanal zum Herstellen einer Fluidverbindung zwischen der Fluidleitung und einem Gehäuseeinlass ausgebildet ist, und Flansche, die jeweils Durchführungen zum Durchführen eines Befestigungsmittels aufweisen. Erfindungsgemäß bilden zumindest zwei Flansche ein unteres Flanschpaar zur Befestigung des Zwischenstücks am Gehäuseabschnitt und zumindest zwei Flansche ein oberes Flanschpaar zur Anbindung eines Fluidleitungsanschlussstücks an das Zwischenstück. Die Flanschpaare sind um die Kanalachse versetzt zueinander und in Richtung der Kanalachse abstandslos zueinander angeordnet. Zudem sind die Durchführungen des oberen Flanschpaares umfangsseitig geöffnet.

Durch den Versatz der Flanschpaare um die Kanalachse bzw. die Verdrehung der Flanschpaare zueinander und deren unmittelbare Anordnung übereinander bzw. einem Ineinanderübergehen zeichnet sich das Zwischenstück durch eine im Vergleich zu den vorbeschriebenen bekannten Zwischenstücken reduzierten Bauhöhe aus, da kein Freiraum zur Positionierung der Befestigungsmittel bzw. eines Befestigungsmittelteils zwischen dem Flanschpaar erforderlich ist. Der notwendige Freiraum wird durch die Verdrehung seitlich des unteren Flanschpaares geschaffen. Dadurch, dass die oberen Durchführungen umfangseitig geöffnet sind, können Befestigungsmittel wie Schrauben zur Anbindung der Fluidleitung jederzeit und insbesondere auch nachträglich, also nachdem das Zwischenstück am Gehäuseabschnitt befestigt wurde, eingesetzt werden. Aufgrund der geringen Beabstandung des oberen Flanschpaares von dem Gehäuseabschnitt wirkt dieser dann quasi als Begrenzung für die lose eingesetzten Befestigungsmittel vor ihrer Verschraubung. Durch das nachträgliche Einsetzen der Schrauben und durch die axiale Positionssicherung des Gehäuseabschnitts werden die Befestigung des Zwischenstücks und insbesondere die Anbindung der Fluidleitung wesentlich vereinfacht. Ein beispielhaftes Anwendungsgebiet des Zwischenstückes ist ein Niederdruckturbinengehäuse eines Flugtriebwerks, wobei über das Zwischenstück ein Kühlmittel der Niederdruckturbine zugeführt wird. Selbstverständlich kann das Zwischenstück auch zum Anschluss von anderen Fluidleitungen insbesondere an ein Gehäuse einer Strömungsmaschine dienen.

Bei einem bevorzugten Ausführungsbeispiel sind die Flanschpaare um 90° versetzt bzw. verdreht zueinander angeordnet. Hierdurch kann mit einer minimalen Anzahl von Flanschen eine hochbelastbare Anbindung erfolgen.

Bevorzugterweise erstrecken sich die Flanschpaare radial zur Kanalachse. Durch diese Maßnahme kann die Stabilität der Befestigung des Zwischenstücks an dem Gehäuseabschnitt sowie die Anbindung des Leitungsanschlusselementes an dem Zwischenstück erhöht werden.

Bevorzugterweise hat das obere Flanschpaar im Bereich seiner Durchführungen seitliche untere Anschläge zum Bilden eines Formschlusses mit einem gegenüber einem Befestigungsmittelschaft verbreiterten Befestigungsmittelteils. Die Anschläge bilden hierdurch eine Verdrehsicherung, so dass trotz der reduzierten Bauhöhe eine einfache Montage des Zwischenstücks erfolgen kann. Ein Werkzeug zum Festhalten des Befestigungsmittels ist nicht erforderlich. Zudem wirken die Anschläge als Sicherungen zum Verhindern eines versehentlichen Lösens der jeweiligen Befestigungsmittel.

Die Anschläge können sich vom oberen Flanschpaar erstreckende Wandabschnitte sein. Derartige Anschläge sind einfach auszuführen. Beispielsweise können sie aus dem oberen Flanschpaaren herausgefräst werden.

Um eine kippfreie Auflage des Zwischenstücks am Gehäuseabschnitt zu erreichen, ist es vorteilhaft, wenn das untere Flanschpaar über eine Unterseite des den Fluidkanal aufweisenden Kerngehäuses in Richtung der Kanalachse hervorsteht. Hierdurch wird das Kerngehäuse im montierten Zustand vom Gehäuseabschnitt beabstandet und bildet keine Anlagefläche, so dass das Zwischenstück ausschließlich über das untere Flanschpaar an dem Gehäuseabschnitt aufliegt.

Die Ausrichtung des Zwischenstücks an dem Gehäuseabschnitt sowie die Ausrichtung des Leitungsanschlusselements an dem Zwischenstück lässt sich vereinfachen, wenn die Durchführungen Langlöcher sind, die sich radial zur Kanalachse erstrecken. Gleichzeitig kann über die Langlöcher ein Toleranzausgleich zu Befestigungsmittelbohrungen in dem Gehäuseabschnitt und in dem Leitungsanschlusselement erfolgen.

Bevorzugterweise hat der Fluidkanal eine Kanalwandung, die sich in Richtung der Kanalachse über Anlageflächen des unteren Flanschpaares hinaus erstreckt. Hierdurch wird der Fluidkanal in den Gehäuseeinlass hineingeführt, wodurch eine Leckage vermieden bzw. ein Leckagerisiko verringert wird.

Zur Gewichtsreduzierung kann das Kerngehäuse bezogen auf die Kanalachse eine obere Ringausnehmung und/oder eine untere Ringausnehmung aufweisen.

Eine bevorzugte Strömungsmaschine ist mit zumindest einem an einen Gehäuse angebundenen erfindungsgemäßen Zwischenstück versehen. Hierdurch kann eine mit dem Zwischenstück verbundene Fluidleitung eng entlang des Gehäuses geführt werden. Bevorzugterweise ist das Zwischenstück am Gehäuse eines Niederdruckverdichters angeordnet und mit einer Kühlmittelleitung zum Zuführen von Kühlmittel zum Niederdruckverdichter verbunden.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand schematischer Darstellungen näher erläutert. Es zeigen:
- Figur 1: eine perspektivische Draufsicht auf ein erfindungsgemäßes Zwischenstück, das an einem Gehäuseabschnitt einer Strömungsmaschine angebunden und mit einem Anschlusselement einer Fluidleitung versehen ist,
- Figur 2: eine Einzeldarstellung des Zwischenstück aus der Vogelperspektive,
- Figur 3: eine Einzeldarstellung des Zwischenstücks aus der Froschperspektive,
- Figur 4: eine Seitendarstellung des Zwischenstücks,
- Figur 5: eine Seitenansicht des Zwischenstücks mit montiertem Fluidleitungsanschlusselement, und
- Figur 6: eine Unteransicht des Zwischenstücks mit montiertem Fluidleitungsanschlusselement.

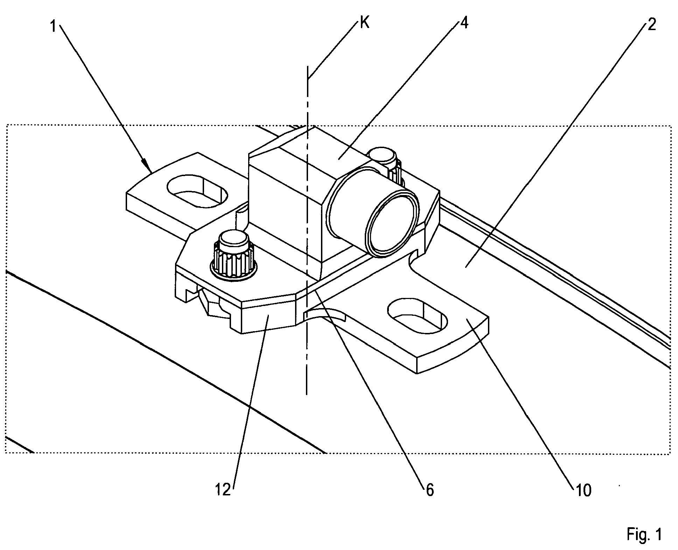

In Figur 1 ist ein Ausführungsbeispiel eines erfindungsgemäßen Zwischenstücks 1 zum Anschluss einer nicht gezeichneten Fluidleitung an einen Gehäuseabschnitt 2 einer Strömungsmaschine gezeigt. Die Fluidleitung wird über ein an ihr angeordnetes Anschlusselement 4 an dem Zwischenstück 1 angebunden. Der Gehäuseabschnitt ist beispielsweise ein Abschnitt eines Niederdruckverdichtergehäuse und die Fluidleitung ist eine Kühlmittelleitung zum Zuführen eines Kühlmittels in den Niederdruckverdichter. Die Strömungsmaschine an sich ist beispielsweise eine Gasturbine und insbesondere ein Flugtriebwerk.

Das Zwischenstück 1 hat ein quaderförmiges Kerngehäuse 6, das von einem in den folgenden Figuren mit dem Bezugszeichen 8 versehenen Fluidkanal zum Herstellen einer Fluidverbindung zwischen der Fluidleitung und einem Gehäuseeinlass des Gehäuseabschnitts 2 durchsetzt wird. Aus Gründen der Übersichtlichkeit ist in Figur 1 lediglich eine in in Längsrichtung des Fluidkanals 1 weisende Kanalachse K des Fluidkanals 8 eingezeichnet. Zudem hat das Zwischenstück 1 ein unteres Flanschpaar 10, mittels dem es bzw. das Kerngehäuse 8 an dem Gehäuseabschnitt 2 angebunden ist, und ein oberes Flanschpaar 12, an dem das Leitungsanschlusselement 4 angebunden ist.

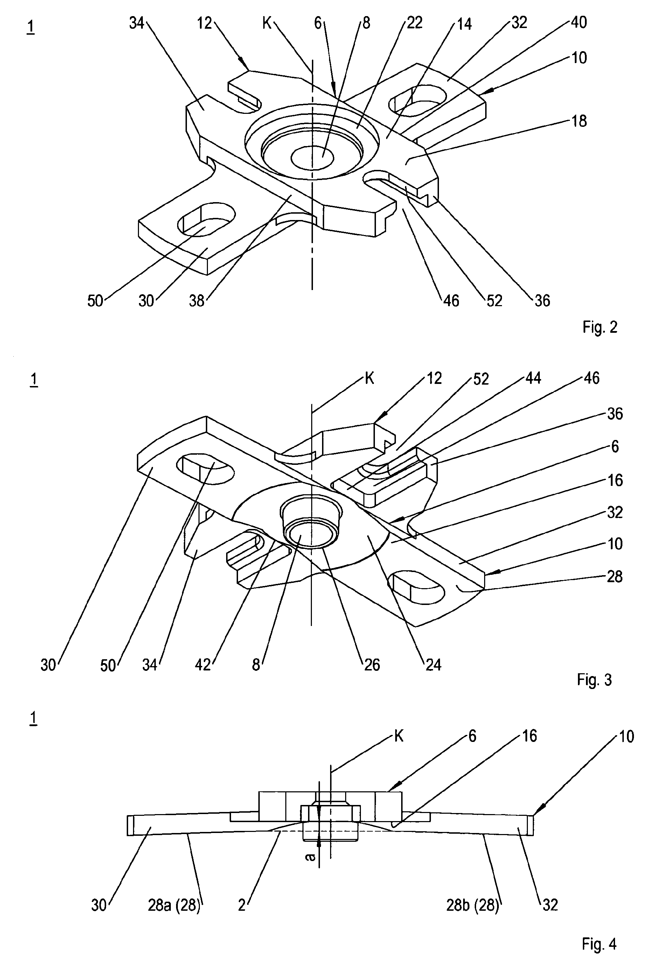

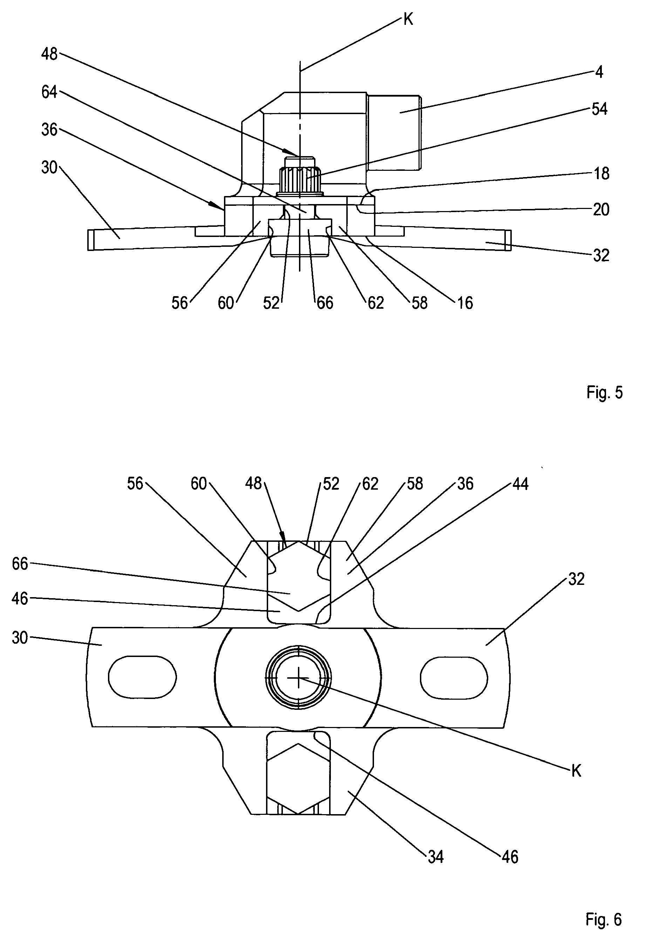

Wie in den Figuren 2 und 3 gezeigt, durchsetzt der Fluidkanal 8 das Kerngehäuse 6 von einer Oberseite 14 in Richtung einer Unterseite 16. Die Oberseite 14 bildet dabei mit dem oberen Flanschpaar 12 eine Anbindungsfläche 18 für eine in Figur 5 bezifferte Kontaktfläche 20 des Leitungsanschlusselements 4. Wenn das Leitungsanschlusselement 4 einen über seine Kontaktfläche 20 herausragenden zentralen Körperabschnitt hat oder in dem Kerngehäuse 6 beispielsweise eine nicht gezeigte Ringdichtung zwischen der Anbindungsfläche 18 und der Kontaktfläche 20 angeordnet wird, kann in die Oberseite 14 eine entsprechende obere Ringausnehmung 22 eingebracht sein. Zudem kann in der Unterseite 16 eine untere Ringausnehmung 24 zur beispielsweisen Gewichtsreduzierung des Zwischenstücks 1 eingebracht sein. Zur Verminderung einer Leckage im Bereich zwischen dem Gehäuseabschnitt 2 und dem Zwischenstück 1 hat der Fluidkanal 8 eine Kanalwandung 26, die über eine von dem unteren Flanschpaar 10 gebildete Anlagefläche 28 hinausgeführt ist und die im montierten Zustand in den Gehäuseinlass eintaucht (siehe auch Figur 4).

Die Flanschpaare 10, 12 sind jeweils um die Kanalachse K um 90° versetzt zueinander angeordnet. Sie haben jeweils zwei in Radialrichtung fluchtende Flansche 30, 32 und 34, 36, die sich jeweils von zwei voneinander abgewandten Seitenflächen 38, 40 und 42, 44 des Kerngehäuses 6 erstrecken. In Richtung der Kanalachse K sind die Flanschpaare 10, 12 abstandslos zueinander angeordnet. Wie im Folgenden noch erläutert werden somit Aufnahmeräume bzw. Freiräume 46 zur Aufnahme von Befestigungsmitteln 48 zur Anbindung des Fluidanschlusselements 4 seitlich des unteren Flanschpaare geschaffen, wodurch das Zwischenstück 1 flach bzw. mit einer geringen Bauhöhe ausgebildet werden kann bzw. ausgebildet ist.

Das obere Flanschpaar 12 bzw. die oberen Flansche 34, 36 schließen bündig mit der Oberseite 14 des Kerngehäuses 6 ab und bilden mit dieser die gemeinsame Anbindungsfläche 18 zur Anbindung des Leitungsanschlusselements 4. Die Anbindungsfläche 18 ist geometrisch an die Kontaktfläche 20 des Leitungsanschlusselements 4 angepasst. In dem gezeigten Ausführungsbeispiel ist die Anbindungsfläche 18 eben ausgebildet

Wie in Figur 4 gezeigt, bildet das untere Flanschpaar 10 bzw. bilden die unteren Flansche 30, 32 die bzw. eine gemeinsame Anlagefläche 28 bzw. 28a, 28b zur Anlage an dem Gehäuseabschnitt 2. Bevorzugterweise ist die Anlagefläche 28 zur Verbesserung einer Anlage an dem Gehäuseabschnitt 2 geometrisch an den Gehäuseabschnitt angepasst. In dem gezeigten Ausführungsbeispiel hat die Anlagefläche 28 eine konkave Wölbung, die einer konvexen Wölbung des Gehäuseabschnitts 2 entspricht.

Zusätzlich zur Verbesserung der Anlage des Zwischenstücks 1 an dem Gehäuseabschnitt 2 steht in dem gezeigten Ausführungsbeispiel das untere Flanschpaar 10 über die Unterseite 16 des Kerngehäuses 6 in Richtung der Kanalachse K hervor. Hierdurch ist im montierten Zustand das Kerngehäuse 6 mit seiner Unterseite 16 in einem Abstand a vom gestrichelt angedeuteten Gehäuseabschnitt 2 positioniert, so dass eine Auflage des Kerngehäuses 6 auf dem Gehäuseabschnitt 2 verhindert wird. Zudem wird durch diese Beabstandung wie in den Figuren 5 und 6 zu erkennen eine Positionierung des Befestigungsmittels 48 erleichtert.

Gemäß den Figuren 2 und 3 ist in jedem Flansch 30, 32 und 34, 36 jeweils eine Durchführung 50, 52 zur Aufnahme eines der Befestigungsmittel 48 ausgebildet. Wie in Figur 5 beispielhaft gezeigt, ist das Befestigungsmittel 48 jeweils bevorzugterweise eine Schraube, die mit einer entsprechenden Mutter 54 zusammenwirkt. Aus Gründen der Übersichtlichkeit sind die Durchführungen 50, 52 gemäß der Darstellung in den Figuren 2 und 3 lediglich im linken unteren Flansch 30 und im vorderen oberen Flansch 36 beziffert.

Die Durchführungen 50 des unteren Flanschpaares 10 sind als Langlöcher ausgebildet, die sich radial zur Kanalachse K erstrecken und somit mittig der Flansche 30, 32 ausgebildet sind.

Die Durchführungen 52 des oberen Flanschpaares 12 sind als umfangsseitig geöffnete Langlöcher ausgebildet, die sich ebenfalls radial zur Kanalachse K erstrecken und somit mittig der oberen Flansche 34, 36 ausgebildet sind. Somit sind wie die Flanschpaare 10, 12 ebenfalls die oberen und unteren Durchführungen 50, 52 um 90° versetzt zueinander. In dem gezeigten Ausführungsbeispiel sind die oberen Durchführungen 52 insbesondere stirnseitig und somit bezogen auf die Kanalachse K in Radialrichtung geöffnet.

Wie in den Figuren 5 und 6 beziffert, haben die oberen Flansche 34, 36 jeweils zwei in Richtung des unteren Flanschpaares 10 orientierte Wandabschnitte 56, 58, die beidseits der Durchführungen 52 angeordnet sind und zwei gegenüberliegende Formschlussflächen 60, 62 aufweisen. Die Wandabschnitte 56, 58 begrenzen mit ihren Formschlussflächen 60, 62 seitlich jeweils die Aufnahmeräume 46. Die Beabstandung der Formschlussflächen 60, 62 ist derart, dass zwischen ihnen ein gegenüber einem Befestigungsmittelschaft 64 verbreiterter Befestigungsmittelkopf 66 nahezu spielfrei angeordnet werden kann.

Wie in Figur 6 gezeigt, erstrecken sich die Aufnahmeräume 46 von der Seitenfläche 44 bzw. 46 und sind stirnseitig sowie nach unten geöffnet. Sie dienen zur Aufnahme der Befestigungsmittelkopf 66, wobei durch die stirnseitige Öffnung die Befestigungsmittel 48 für das Leitungsanschlusselement 4 eingesetzt werden können, nachdem das Zwischenstück 1 am Gehäuseabschnitt 2 befestigt wurde, so dass die Fluidleitung bequem am Zwischenstück 1 angebunden werden kann. Im angebundenen Zustand des Leitungsanschlusselements 4 liegen die Befestigungsmittel 48 mit ihren Köpfen 66 seitlich flächig an den Formschlussflächen 60, 62 an und sind mit ihren Schäften 64 in Richtung der Kanalachse K nach oben geführt. An ihrem durch die Durchführungen 52 geführten freien Schaftendabschnitte ist dann jeweils eine Mutter 54 aufgeschraubt.

Die Wandabschnitte 56, 58 und insbesondere deren Formschlussflächen 60, 62 wirken somit als Anschläge und insbesondere als Verdrehsicherungen für die jeweilige Befestigungsmittel 48. Bevorzugterweise stehen die Wandabschnitte 56, 58 nicht über die Unterseite 16 des Kerngehäuses 6 hervor, sondern erstrecken sich maximal bis zu dieser bzw. schließen bündig mit dieser ab. Hierdurch sind die Wandabschnitte 56, 58 im montieren Zustand ebenfalls von dem Gehäuseabschnitt 2 um den Abstand a beabstandet (siehe Figur 4). Die Befestigungsmittelköpfe 66 haben in dem gezeigten Ausführungsbeispiel eine derartige Höhe, dass sie ebenfalls bündig mit der Unterseite 16 abschließen.

Offenbart ist ein Zwischenstück zum Anschluss einer Fluidleitung an einen Gehäuseabschnitt einer Strömungsmaschine, bei der ein oberes und ein unteres Flanschpaare um eine Kanalachse versetzt zueinander angeordnet sind und in Richtung der Kanalachse das obere Flanschpaar abstandslos zum unteren Flanschpaar angeordnet ist, wobei die Durchführungen des oberen Flanschpaares umfangsseitig geöffnet sind.

### Bezugszeichenliste

- 1: Zwischenstück
- 2: Gehäuseabschnitt
- 4: Anschlusselement / Leitungsanschlusselement
- 6: Kerngehäuse
- 8: Fluidkanal
- 10: unteres Flanschpaar
- 12: oberes Flanschpaar
- 14: Oberseite
- 16: Unterseite
- 18: Anbindungsfläche
- 20: Kontaktfläche
- 22: obere Ringausnehmung
- 24: untere Ringausnehmung
- 26: Kanalwandung
- 28: Anlagefläche
- 30: Flansch
- 32: Flansch
- 34: Flansch
- 36: Flansch
- 38: Seitenfläche
- 40: Seitenfläche
- 42: Seitenfläche
- 44: Seitenfläche
- 46: Aufnahmeraum
- 48: Befestigungsmittel
- 50: Durchführung
- 52: Durchführung
- 54: Mutter
- 56: Wandabschnitt /Anschlag
- 58: Wandabschnitt /Anschlag
- 60: Formschlussfläche
- 62: Formschlussfläche
- 64: Befestigungsmittelschaft / Schaft
- 66: Befestigungsmittelkopf / Kopf

- a: Abstand
- K: Kanalachse

## Patentansprüche

1. Zwischenstück (1) zum Anschluss einer Fluidleitung an einen Gehäuseabschnitt (2) einer Strömungsmaschine, mit einem Kerngehäuse (6), in dem ein Fluidkanal (8) zum Herstellen einer Fluidverbindung zwischen der Fluidleitung und einem Gehäuseeinlass ausgebildet ist, und mit sich von dem Kerngehäuse (6) erstreckenden Flanschen (30, 32, 34, 36), die jeweils Durchführungen (50, 52) zum Durchführen eines Befestigungsmittels (48) aufweisen, **dadurch gekennzeichnet, dass** zumindest zwei Flansche (30, 32) ein unteres Flanschpaar (10) zur Befestigung des Zwischenstücks (1) am Gehäuseabschnitt (2) und zumindest zwei Flansche (34, 36) ein oberes Flanschpaar (12) zur Anbindung eines Anschlusselements (4) der Fluidleitung an das Zwischenstück (1) bilden, wobei die Flanschpaare (10, 12) um eine Kanalachse (K) versetzt zueinander und in Richtung der Kanalachse (K) abstandslos zueinander angeordnet sind, wobei die Durchführungen (50, 52) des oberen Flanschpaares (12) umfangsseitig geöffnet sind.

2. Zwischenstück nach Anspruch 1, wobei die Flanschpaare (10, 12) um 90° zueinander versetzt sind.

3. Zwischenstück nach Anspruch 1 oder 2, wobei sich die Flanschpaare (10, 12) radial zur Kanalachse (K) erstrecken.

4. Zwischenstück nach einem der Ansprüche 1, 2 oder 3, wobei das obere Flanschpaar (12) im Bereich seiner Durchführungen (50, 52) seitliche untere Anschläge (56, 58) zum Bilden eines Formschlusses mit einem gegenüber einem Befestigungsmittelschaft (64) verbreiterten Befestigungsmittelteil (66) hat.

5. Zwischenstück nach Anspruch 4, wobei die Anschläge sich vom oberen Flanschpaar (12) erstreckende Wandabschnitte (56, 58) sind.

6. Zwischenstück nach einem der vorhergehenden Ansprüche, wobei das untere Flanschpaar (10) über eine Unterseite (16) des Kerngehäuses (6) in Richtung der Kanalachse (K) hervorsteht.

7. Zwischenstück nach einem der vorhergehenden Ansprüche, wobei die Durchführungen (50, 52) Langlöcher sind, die sich radial zur Kanalachse (K) erstrecken.

8. Zwischenstück nach einem der vorhergehenden Ansprüche, wobei der Fluidkanal (8) eine Kanalwandung (26) hat, die sich in Richtung der Kanalachse (K) über eine Anlagefläche (28) des unteren Flanschpaares (10) hinaus erstreckt.

9. Zwischenstück nach einem der vorhergehenden Ansprüche, wobei das Kerngehäuse (6) bezogen auf die Kanalachse (K) eine obere Ringausnehmung (22) und/oder eine untere Ringausnehmung (24) aufweist.

10. Strömungsmaschine mit zumindest einem an einem Gehäuse angebundenen Zwischenstück (1) nach einem der vorhergehenden Ansprüche.

## Claims

1. Spacer (1) to connect a fluid line to a housing section (2) of a flow machine, having a core housing (6) in which a fluid channel (8) is formed to produce a fluid connection between the fluid line and a housing inlet, and having flanges (30, 32, 34, 36) which extend from the core housing (6) and which each have ducts (50, 52) to conduct a fastening means (48), **characterised in that** at least two flanges (30, 32) form a lower flange pair (10) to fasten the spacer (1) to the housing section (2) and at least two flanges (34, 36) form an upper flange pair (1) to connect a connection element (4) of the fluid line to the spacer (1), wherein the flange pairs (10, 12) are arranged to be offset with respect to each other around a channel axis (K) and without a gap with respect to each other in the direction of the channel axis (K), wherein the ducts (50, 52) of the upper flange pair (12) are opened on the peripheral side.

2. Spacer according to claim 1, wherein the flange pairs (10, 12) are offset by 90° with respect to each other.

3. Spacer according to claim 1 or 2, wherein the flange pairs (10, 12) extend radially to the channel axis (K).

4. Spacer according to one of claims 1, 2 or 3, wherein the upper flange pair (12) has laterally lower stops (56, 58) in the region of its ducts (50, 52) to form a positive bond with a fastening means piece (66) distributed relative to a fastening means shaft (64).

5. Spacer according to claim 4, wherein the stops are wall sections (56, 58) which extend from the upper flange pair (12).

6. Spacer according to one of the preceding claims, wherein the lower flange pair (10) protrudes over a lower side (16) of the core housing (6) in the direction of the channel axis (K).

7. Spacer according to one of the preceding claims, wherein the ducts (50, 52) are elongated holes which extend radially to the channel axis (K).

8. Spacer according to one of the preceding claims, wherein the fluid channel (8) has a channel wall (26) which extends in the direction of the channel axis (K) beyond a contact surface (28) of the lower flange pair (10).

9. Spacer according to one of the preceding claims, wherein the core housing (6) has an upper ring receiver (22) and/or a lower ring receiver (24) with regard to the channel axis (K).

10. Flow machine having at least one spacer (1) connected to a housing, according to one of the preceding claims.

## Revendications

1. Pièce intermédiaire (1) servant à raccorder une conduite de fluide à une partie de boîtier (2) d'une turbomachine, comprenant un boîtier central (6) dans lequel est formé un canal de fluide (8) servant à établir une liaison fluidique entre la conduite de fluide et une entrée de boîtier, et comprenant des brides (30, 32, 34, 36) qui s'étendent à partir du boîtier central (6) et qui comprennent chacune des passages (50, 52) destinés à faire passer un moyen de fixation (48), **caractérisé en ce qu'**au moins deux brides (30, 32) forment une paire inférieure (10) de brides servant à fixer la pièce intermédiaire (1) sur la partie de boîtier (2) et au moins deux brides (34, 36) forment une paire supérieure (12) de brides servant à raccorder un élément de raccordement (4) de la conduite de fluide à la pièce intermédiaire (1), les paires de brides (10, 12) étant décalées l'une de l'autre autour d'un axe de canal (K) et étant disposées l'une par rapport à l'autre sans espacement en direction de l'axe de canal (K), les passages (50, 52) de la paire supérieure (12) de brides étant ouverts côté circonférence.

2. Pièce intermédiaire selon la revendication 1, les paires de brides (10, 12) étant décalées l'une de l'autre de 90°.

3. Pièce intermédiaire selon la revendication 1 ou 2, les paires de brides (10, 12) s'étendant radialement par rapport à l'axe de canal (K).

4. Pièce intermédiaire selon l'une quelconque des revendications 1, 2 ou 3, la paire supérieure (12) de brides présentant dans la zone de ses passages (50, 52) des butées inférieures latérales (56, 58) servant à former une coopération de formes avec une pièce centrale de fixation (66) élargie par rapport à une tige centrale de fixation (64).

5. Pièce intermédiaire selon la revendication 4, les butées étant des parties de paroi (56, 58) s'étendant à partir de la paire supérieure (12) de brides.

6. Pièce intermédiaire selon l'une quelconque des revendications précédentes, la paire inférieure (10) de brides faisant saillie d'une face inférieure (16) du boîtier central (6) en direction de l'axe de canal (K).

7. Pièce intermédiaire selon l'une quelconque des revendications précédentes, les passages (50, 52) étant des trous oblongs qui s'étendent radialement par rapport à l'axe de canal (K).

8. Pièce intermédiaire selon l'une quelconque des revendications précédentes, le canal de fluide (8) présentant une paroi (26) qui s'étend en direction de l'axe de canal (K) au-delà d'une surface de butée (28) de la paire inférieure (10) de brides.

9. Pièce intermédiaire selon l'une quelconque des revendications précédentes, le boîtier central (6) présentant par rapport à l'axe de canal (K) un évidement annulaire supérieur (22) et/ou un évidement annulaire inférieur (24).

10. Turbomachine comprenant au moins une pièce intermédiaire (1) selon l'une quelconque des revendications précédentes raccordée à un boîtier.
